(19) Europäisches Patentamt
European Patent Office
Office européen des brevets

(11) Veröffentlichungsnummer: **0 018 624**
**B1**

(12) # EUROPÄISCHE PATENTSCHRIFT

(45) Veröffentlichungstag der Patentschrift: **16.02.83**

(21) Anmeldenummer: **80102311.0**

(22) Anmeldetag: **29.04.80**

(51) Int. Cl.³: **C 08 G 77/20**, C 08 J 3/24, C 08 J 7/04, B 32 B 27/28, B 32 B 27/08, B 32 B 27/10

(54) **Verfahren zur Herstellung von vernetzten Organopolysiloxanen und deren Verwendung als Wirkstoff für abhäsive Beschichtungsmassen für flächige Träger.**

(30) Priorität: **05.05.79 DE 2918254**

(43) Veröffentlichungstag der Anmeldung: **12.11.80 Patentblatt 80/23**

(45) Bekanntmachung des Hinweises auf die Patenterteilung: **16.02.83 Patentblatt 83/07**

(84) Benannte Vertragsstaaten: **BE DE FR GB IT NL**

(56) Entgegenhaltungen:
**DE A 2 747 233**
**DE B 1 195 953**
**US A 3 892 707**

(73) Patentinhaber: **Th. Goldschmidt AG**
**Goldschmidtstrasse 100**
**D-4300 Essen (DE)**

(72) Erfinder: **Weitemeyer, Christian, Dr.**
**Schellstrasse 50**
**D-4300 Essen (DE)**
Erfinder: **Koerner, Götz, Dr.**
**Kantorie 126**
**D-4300 Essen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 018 624 B1

# Verfahren zur Herstellung von vernetzten Organopolysiloxanen und deren Verwendung als Wirkstoff für abhäsive Beschichtungsmassen für flächige Träger

Die Erfindung betrifft ein Verfahren zur Herstellung von vernetzten Organopolysiloxanen durch Umsetzung von Organosiliciumverbindungen, welche olefinisch ungesättigte Gruppen aufweisen, mit Organosiliciumverbindungen, welche SiH-Gruppen aufweisen, in Gegenwart von Katalysatoren und deren Verwendung als Wirkstoff für abhäsive Beschichtungsmassen für flächige Träger, insbesondere Papier und Kunststoffolien.

Zur Herstellung vernetzbarer Organopolysiloxane ist es aus den DE-A 24 27 738, DE-B 22 10 380, US-A 4 066 594 und DE-B 25 09 620 bekannt, Organopolysiloxane, welche olefinisch ungesättigte Gruppen aufweisen, mit Polysiloxanen, welche SiH-Gruppen aufweisen, in Gegenwart von Katalysatoren, insbesondere Platinkatalysatoren, miteinander umzusetzen. Als besonders hydrolysestabil haben sich dabei diejenigen Umsetzungsprodukte erwiesen, bei denen die olefinisch ungesättigte Kohlenwasserstoffgruppe, z. B. die Vinylgruppe, über eine SiC-Bindung mit dem Polysiloxangerüst verbunden ist. Derartige Vinylpolysiloxane sind jedoch in der Herstellung sehr teuer, da sie aus den nur schwierig herstellbaren und deshalb teueren Halogenvinylsilanen durch Hydrolyse hergestellt werden müssen.

Leichter zugänglich sind Polysiloxane mit Alkenyloxygruppen, z. B. Allyloxygruppen, die dadurch erhalten werden können, daß man Chlor- und/oder Alkoxypolysiloxane mit Allylalkohol oder Allylalkoholderivaten umsetzt. Dieses ist der US-A 4 079 037 zu entnehmen. Es entstehen dabei z. B. Produkte mit Struktureinheiten der Formel

$$\equiv Si-O-CH_2-CH=CH_2$$

Auch diese Verbindungen lassen sich mit SiH-Gruppen enthaltenden Polysiloxanen in Gegenwart üblicher Katalysatoren bei erhöhter Temperatur umsetzen. Hierbei ist es jedoch von Nachteil, daß sowohl die Alkenyloxygruppen enthaltenden Ausgangsverbindungen als auch die vernetzten Organopolysiloxane infolge der SiOC-Verknüpfung relativ hydrolyseinstabil sind.

In Kenntnis dieses Standes der Technik liegt dieser US-A 4 079 037 die Aufgabe zugrunde, die Hydrolyseinstabilität der an Silicium über Sauerstoff gebundenen Alkenyloxygruppen durch gezielte Substitution, insbesondere an dem dem Sauerstoff benachbarten Kohlenstoffatom der Alkenyloxygruppe, zu verbessern. Die Wasserstoffatome des α-Kohlenstoffatoms der Alkenyloxygruppe werden dabei ganz oder teilweise durch Kohlenwasserstoffreste mit 1 bis 6 Kohlenstoffatomen ersetzt. Dabei steigt zwar die Hydrolysebeständigkeit der alkenyloxysubstituierten Polysiloxane, jedoch sinkt auch die Reaktivität der entsprechend substituierten Derivate des Allylalkohols mit Halogenpolysiloxanen. Aus Beispiel 1 der US-A 4 079 037 geht hervor, daß nach einer Reaktionszeit von 48 Stunden nur eine 50 %ige Ausbeute an alkenyloxysubstituiertem Polysiloxan erhalten wird. Ein solches Verfahren ist daher technisch mit wirtschaftlichem Erfolg kaum verwertbar.

Der vorliegenden Erfindung liegt nun die Aufgabe zugrunde, reaktive Organosiliciumverbindungen mit olefinisch ungesättigten Gruppen aufzufinden, die durch Umsetzung mit SiH-Gruppen enthaltenden Organopolysiloxanen zu vernetzten Organopolysiloxanen umgesetzt werden können und insbesondere im vernetzten Zustand hydrolysestabil sind, wobei jedoch die Ausgangsverbindungen in einfacher Weise zugänglich sein sollen.

Erfindungsgemäß gelingt dies dadurch, daß als Organosiliciumverbindungen, solche verwendet werden, die im mittleren Molekül mindestens eine Gruppe der Formel

$$-\overset{|}{\underset{|}{Si}}-O-CH_2-\overset{\overset{\displaystyle R}{|}}{\underset{\underset{\displaystyle CH_2OCH_2-CH=CH_2}{|}}{C}}-CH_2OCH_2-CH=CH_2$$

wobei R eine Methyl-, Äthyl- oder $-CH_2OCH_2-CH=CH_2$-Gruppe ist, enthalten und mit den Organosiliciumverbindungen B in solchen Mengen umgesetzt werden, daß das Verhältnis SiH-Gruppen zu olefinischen Doppelbindungen 1 : 1-3 beträgt.

Das erfindungsgemäße Verfahren wird somit mit Organosiliciumverbindungen durchgeführt, welche an einem Siliciumatom mindestens eine Trimethyloläthandiallyläther- oder Trimethylolpropandiallyläther- oder Pentaerythrittriallyläthergruppe aufweisen.

Die Verknüpfung des Trimethyloläthandiallyläthers, des Trimethylolpropandiallyläthers oder des Pentaerythrittriallyläthers gelingt leicht durch Reaktion der Hydroxylgruppe mit einer Si-Halogen- oder Si-Alkoxygruppe eines Organosilans oder Organopolysiloxans.

Überraschenderweise hat sich gezeigt, daß vernetzte Organopolysiloxane, welche durch Umsetzung der erfindungsgemäß zu verwendenden Organosiliciumverbindungen mit Wasserstoffpolysiloxanen erhalten werden, unter Anwendungsbedingungen hydrolysestabil sind. Es ist nicht nötig, die der Hydroxylfunktion des Allyläthers benachbarte $CH_2$-Gruppe zu substituieren und deshalb möglich, zur Einführung von Allylgruppen in die Organosiliciumverbindungen A den im Handel erhältlichen Pentaerythrittriallyläther bzw. die vorgenannten Diallyläther zu verwenden und mit einem, in bezug auf dessen OH-Gruppe reaktiven Silan oder Polysiloxan in praktisch quantitativer Ausbeute umzusetzen.

Verwendet man derartige Umsetzungsprodukte als Organosiliciumverbindungen A und läßt diese mit den üblicherweise zu verwendenden Organopolysiloxanen mit SiH-Gruppen in Gegenwart von Katalysatoren, insbesondere Platinkatalysatoren, bei erhöhter Temperatur reagieren, erhält man auf einfache und deshalb besonders wirtschaftliche Art vernetzte, hydrolysestabile Organopolysiloxane.

Besonders bevorzugt verwendet man als Organosiliciumverbindungen Organopolysiloxane. Aus Gründen der leichten Zugänglichkeit sind insbesondere die Methylpolysiloxane bevorzugt. Dabei können gegebenenfalls bis zu 10 Mol-% der Methylgruppen durch andere Alkyl- und/oder Arylgruppen ersetzt werden.

Besonders bevorzugt sind Methylpolysiloxane der allgemeinen Formel

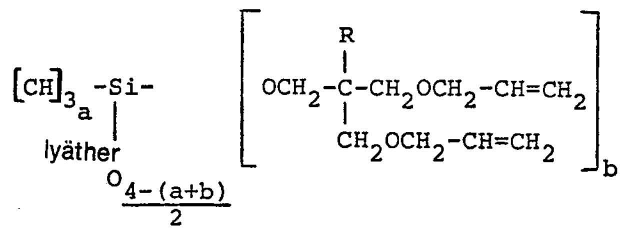

wobei

R die obengenannte Bedeutung,

a einen Wert von 1,8 bis 2,2 und

b einen Wert von 0,004 bis 0,5 hat.

Besonders bevorzugt sind Verbindungen, bei denen a einen Wert von 2 hat, das Organopolysiloxangerüst linear ist und die beispielsweise verwendeten Pentaerythrittriallyläthergruppen endbegrenzende Gruppen sind. Beispiele geeigneter Organosiliciumverbindungen A sind

PTAOH = Pentaerythrittriallyläther

TMAOH = Trimethyloläthandiallyläther

TMPOH = Trimethylolpropandiallyläther

$Si(-OPTA)_4$;  $CH_3-Si-(-OTMA)_3$;

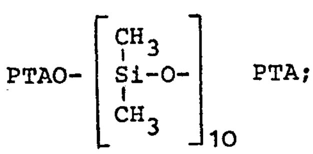

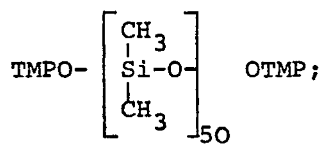

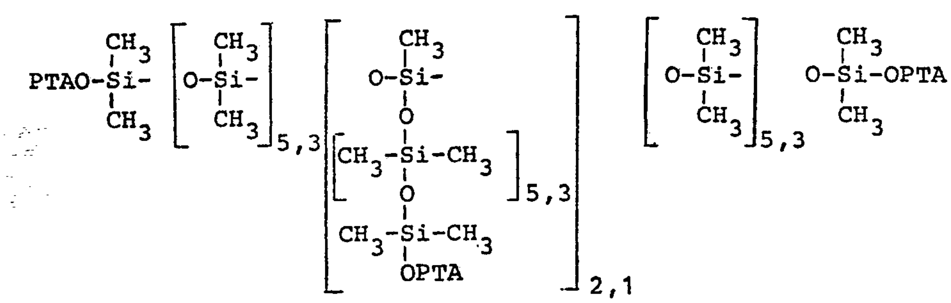

Für die Umsetzung mit den Organosiliciumverbindungen A können als Organosiliciumverbindungen B die bekannten Wasserstoffpolysiloxane des Standes der Technik verwendet werden. Diese Wasserstoffpolysiloxane können cyclisch, linear oder verzweigt sein.

Beispiele für cyclische Wasserstoffpolysiloxane sind

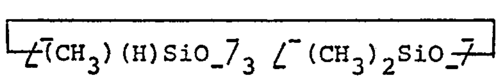

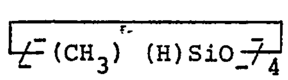  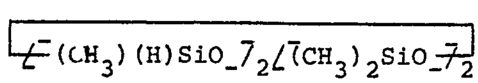

Beispiele für lineare Wasserstoffpolysiloxane sind

$$(H)\,(CH_3)_2SiO\,[(CH_3)_2SiO]_{1\text{-}20}Si(CH_3)_2(H),$$

$$(CH_3)_3SiO\,[(CH_3)\,(H)SiO]_8Si(CH_3)_3,$$

$$(H)\,(CH_3)_2SiO\,[(CH_3)_2SiO]_2\,[(CH_3)\,(H)SiO]_3Si(CH_3)_2\,(H)$$

oder

$$(CH_3)_3SiO\,[(CH_3)_2SiO]_5\,[(CH_3)\,(H)SiO]_3Si(CH_3)_3$$

Die Wasserstoffpolysiloxane können auch aus trifunktionellen Siloxyeinheiten bestehen oder diese enthalten. An die Stelle der vorgenannten Methylgruppen können auch Alkylgruppen mit 2 und mehr Kohlenstoffatomen, Arylgruppen oder Aralkylgruppen treten. Die Kohlenwasserstoffreste können gegebenenfalls substituiert sein. Weitere Beispiele geeigneter Wasserstoffpolysiloxane können der Literatur entnommen werden. Beispielsweise soll dabei auf die US-A 4 079 037, Spalte 11, Zeilen 32-43 verwiesen werden.

Die Organosiliciumverbindungen A werden mit den Organosiliciumverbindungen B in bezug auf olefinische Doppelbindungen und SiH-Gruppen in solchen Mengen umgesetzt, daß eine Vernetzung sichergestellt ist. Im allgemeinen soll dabei einer olefinischen Doppelbindung eine SiH-Gruppe entsprechen. Es ist ein besonderer Vorteil der erfindungsgemäß verwendeten Organosiliciumverbindung A, daß der Gehalt an SiH-Gruppen, bezogen auf olefinische Doppelbindungen, auf ein Verhältnis von 1 SiH-Gruppe zu $\leq$ 3 olefinischen Doppelbindungen verringert werden kann.

Als Katalysatoren kommen alle Katalysatoren in Frage, welche in der Lage sind, die Addition von SiH-Gruppen an olefinisch ungesättigten Gruppen zu ermöglichen. Solche Katalysatoren sind z. B. organoperoxide, wie Di-tert.-butylperoxid oder Dicumolperoxid, aber auch Platin enthaltende Verbindungen, wie Chlorplatinsäure oder auf Aktivkohle niedergeschlagenes Platin.

Um die gewünschten vernetzten Organopolysiloxane zu erhalten, werden die Organosiliciumverbindungen A, die Organosiliciumverbindungen B und die Katalysatoren miteinander vermischt und vorzugsweise auf Temperaturen von 80 bis 200 °C erhitzt. Man kann dem Reaktionsansatz zusätzlich Füllstoffe, Pigmente, Weichmacher, Lösungsmittel, Antioxidantien und Inhibitoren zusetzen.

Die vernetzten Organopolysiloxane, insbesondere die Organopolysiloxane, welche durch Umsetzung mit Organopolysiloxanen der Formel

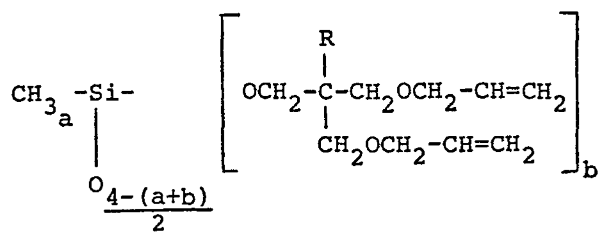

wobei

a = 2 und b =0,1 bis 0,025 ist, erhalten worden sind, eignen sich besonders als Wirkstoff für abhäsive Beschichtungsmassen für flächige Träger, insbesondere Papier und Kunststoffolien.

Die vernetzten Organopolysiloxane können auch als Abdichtungsmassen, zum Ausfüllen von elektronischen Bauteilen, zur Herstellung von elastichen oder starren Formkörpen verwendet werden.

Die folgenden Beispiele sollen das erfindungsgemäße Verfahren näher erläutern.

## Beispiel 1

149,5 g Chlorsilan der Formel $CH_3Si(Cl)_3$ werden zu 758,5 g Pentaerythrittriallyäther (3 Mol + 1 % Überschuß)

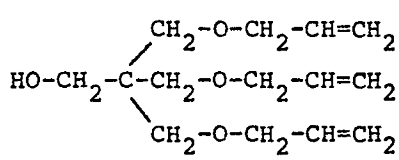

OH Zahl = 224

gelöst in 800 g Toluol innerhalb von 30 Minuten bei Raumtemperatur zugegeben. Die Temperatur steigt auf 40 °C an. Anschließend wird auf Raumtemperatur abgekühlt und 30 Minuten nachgerührt. Während 3 Stunden wird gasförmiges Ammoniak mit einer Geschwindigkeit von ca. 0,3 l/Minute in die Lösung eingeleitet. Ausgefallenes Ammoniumchlorid wird abfiltriert und das Filtrat bei 100 °C im Vakuum eingedampft. Man erhält 749,5 g Produkt mit einer Jodzahl von 284.

10 g dieses Silans werden mit 293,4 g eines SiH-haltigen Siloxans der Formel

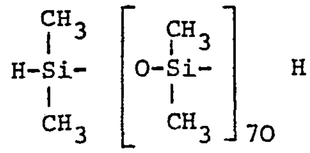

sowie mit 16 mg eines Platinkomplexes der Formel Pyridin · $C_2H_4$ · $PtCl_2$ gut verrührt. Die so zubereitete Mischung hat eine Viskosität von 98 mPa.s (98 cP) und eine Topfzeit von 8 Stunden.

Beispiel 2

870 g Chlorsiloxan der Formel

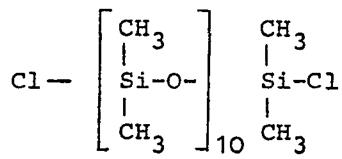

werden zu 505,8 g Pentaerythrittriallyläther (2 Mol + 1 % Überschuß)

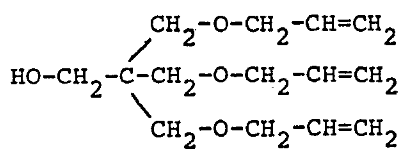

OH Zahl = 224

gelöst in 1 200 g Toluol innerhalb von 30 Minuten bei Raumtemperatur zugegeben. Anschließend wird bei Raumtemperatur 30 Minuten nachgerührt. Während 2 Stunden wird gasförmiges Ammoniak mit einer Geschwindigkeit von ca. 0,3 l/Minute in die Lösung eingeleitet. Ausgefallenes Ammoniumchlorid wird abfiltriert und das Filtrat bei 100 °C im Vakuum eingedampft. Man erhält 1 215 g Produkt mit einer Jodzahl von 116.

100 g dieses Siloxans werden mit 42,86 g eines SiH-haltigen äquilibrierten Siloxangemisches, das durch Reaktion von 2 Gewichtsteilen Octamethyltetrasiloxan und 1 Gewichtsteil Wasserstoffsiloxan der ungefähren Formel

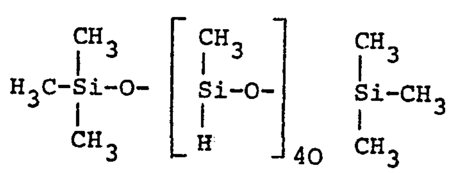

erhalten worden ist, sowie mit 7,6 mg eines Platinkomplexes der Formel Pyridin · $C_2H_4$ · $PtCl_2$ gut verrührt. Die so zubereitete Mischung hat eine Viskosität von 95 mPa.s (95 cP) und eine Topzeit > 24 Stunden.

Beispiel 3

3 759,9 g Chlorsiloxan der Formel

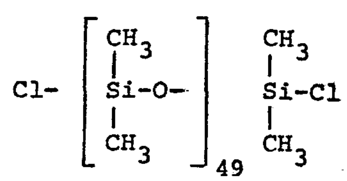

werden zu 505,8 g Pentaerythrittriallyläther (2 Mol + 1 % Überschuß)

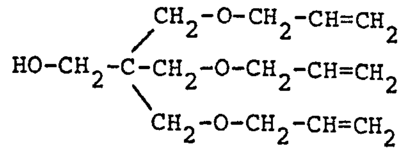

OH Zahl = 224

gelöst in 4 000 g Toluol innerhalb von 30 Minuten bei Raumtemperatur zugegeben. Anschließend wird bei Raumtemperatur 30 Minuten nachgerührt. Während 2 Stunden wird gasförmiges Ammoniak mit einer Geschwindigkeit von ca. 0,3 l/Minute in die Lösung eingeleitet. Ausgefallenes Ammoniumchlorid wird abfiltriert und das Filtrat bei 100 °C im Vakuum eingedampft. Man erhält 3 893,8 g Produkt mit einer Jodzahl von 35,5.

100 g dieses Siloxans werden mit 9,17 g eines SiH-haltigen Siloxans der Formel

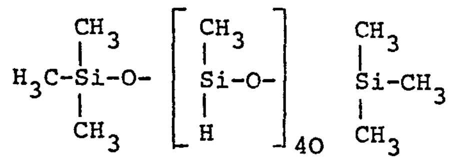

sowie mit 5,8 mg eines Platinkomplexes der Formel Pyridin · $C_2H_4$ · $PtCl_2$ gut verrührt. Die so zubereitete Mischung hat eine Viskosität von 69 mPa.s (69 cP) und eine Topfzeit von 20 Stunden.

Beispiel 4

2 138,4 g Chlorsiloxan der Formel

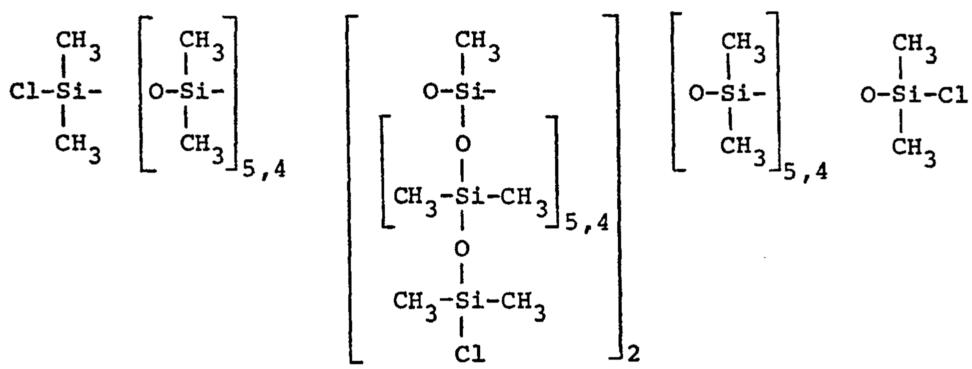

werden zu 1 010 g Pentaerythrittriallyläther (4 Mol + 1 % Überschuß)

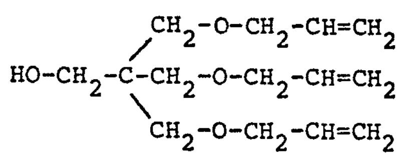

OH Zahl = 224

gelöst in 3 000 g Toluol innerhalb von 30 Minuten bei Raumtemperatur zugegeben. Anschließend wird bei Raumtemperatur 30 Minuten nachgerührt. Während 4 Stunden wird gasförmiges Ammoniak mit einer Geschwindigkeit von ca. 0,3 l/Minute in die Lösung eingeleitet. Ausgefallenes Ammoniumchlorid wird abfiltriert und das Filtrat bei 100 °C im Vakuum eingedampft. Man erhält 2 782,9 g Produkt mit einer Jodzahl von 101,0.

100 g dieses Siloxans werden mit 37,3 g eines SiH-haltigen äquilibrierten Siloxangemisches, das durch Reaktion von 2 Gewichtsteilen Octamethylcyclotetrasiloxan und 1 Gewichtsteil Wasserstoffsiloxan der ungefähren Formel

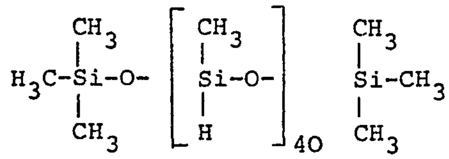

erhalten worden ist, sowie mit 7,3 mg eines Platinkomplexes der Formel Pyridin · $C_2H_4$ · $PtCl_2$ gut verrührt. Die so zubereitete Mischung hat eine Viskosität von 161 mPa.s (161 cP) und eine Topfzeit von 8 Stunden.

Beispiel 5

6 723,9 g Chlorsiloxan der Formel

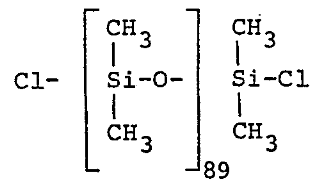

werden zu 432,3 g Trimethylolpropandiallyläther (2 Mol + 1 % Überschuß)

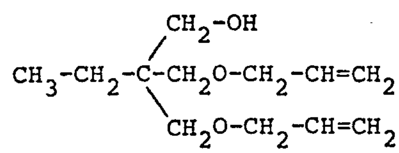

gelöst in 5 000 g Toluol innerhalb von 30 Minuten bei Raumtemperatur zugegeben. Anschließend wird bei Raumtemperatur 30 Minuten nachgerührt. Während 2 Stunden wird gasförmiges Ammoniak mit einer Geschwindigkeit von ca. 0,3 l/Minute in die Lösung eingeleitet. Ausgefallenes Ammoniumchlorid wird abfiltriert und das Filtrat bei 100 °C im Vakuum eingedampft. Man erhält 6 658,0 g Produkt mit einer Jodzahl von 13,8.

100 g dieses Siloxans werden mit 3,49 g eines SiH-haltigen Siloxans der Formel

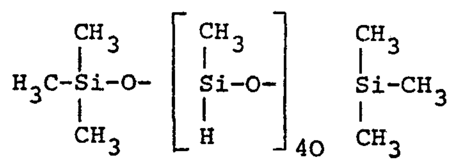

sowie mit 5,5 mg eines Platinkomplexes der Formel Pyridin · $C_2H_4$ · $PtCl_2$ gut verrührt. Die so zubereitete Mischung hat eine Viskosität von 340 mPa.s (340 cP) und eine Topfzeit von > 24 Stunden.

Beispiel 6

2 060,4 g Methoxysiloxan der Formel

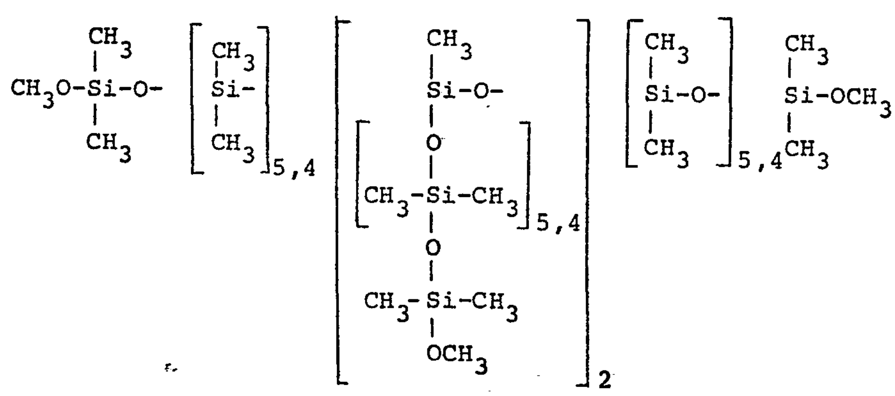

werden zu 1 010 g Pentaerythrittriallyläther (4 Mol + 1 % Überschuß)

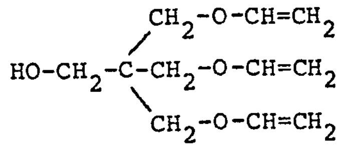

OH Zahl = 224

+ 3 g Butyltitanat (0,1 %) gelöst in 3 000 g Toluol innerhalb von 30 Minuten bei Raumtemperatur zugegeben. Anschließend wird 1 Stunde auf 120 °C erhitzt und entstehendes Methanol abdestilliert. Das restliche Lösungsmittel wird dann im Vakuum bis 100 °C abdestilliert. Man erhält 2 736 g Produkt mit einer Jodzahl von 102,8.

100 g dieses Siloxans werden mit 1 074,2 g eines SiH-haltigen Siloxans der Formel

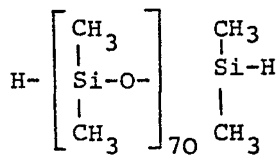

sowie mit 62,4 mg eines Platinkomplexes der Formel Pyridin · $C_2H_4$ · $PtCl_2$ gut verrührt. Die so zubereitete Mischung hat eine Viskosität von 122 mPa.s (122 cP) und eine Topfzeit von 8 Stunden.

Beispiel 7

990,81 g Pentaerythrittriallyläther (3,924 Mol + 1 % Überschuß)

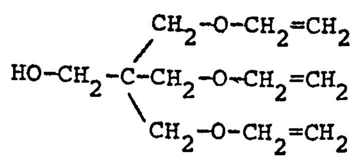

OH Zahl = 224

und 4,27 g Propargylalkohol (0,076 Mol ; 0,2 Gew.-%, bezogen auf Chlorsiloxan) werden in 3 000 g Toluol gelöst. Der Propargylalkohol wird dabei als Härtungsinhibitor zur Vermeidung einer Härtung bei Raumtemperatur eingesetzt. Innerhalb von 30 Minuten werden bei Raumtemperatur 2 138,4 g Chlorsiloxan der Formel

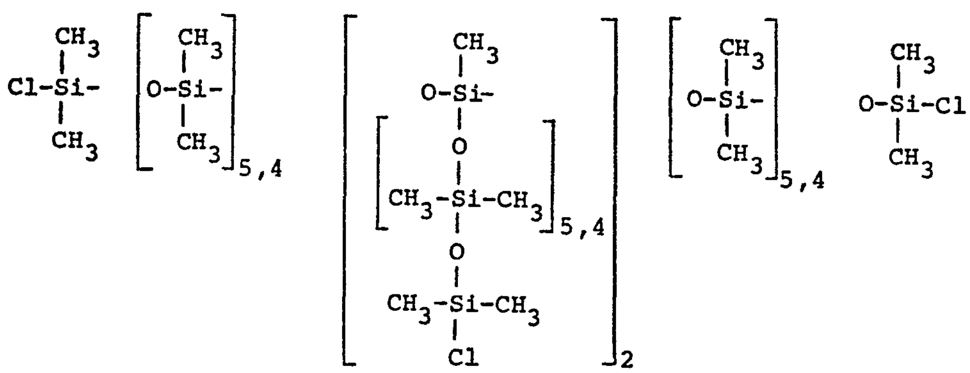

zugegeben. Anschließend wird bei Raumtemperatur 30 Minuten nachgerührt. Während 4 Stunden wird gasförmiges Ammoniak mit einer Geschwindigkeit von ca. 0,3 l/Minute in die Lösung eingeleitet. Ausgefallenes Ammoniumchlorid wird abfiltriert und das Filtrat bei 100 °C im Vakuum eingedampft. Man erhält 2 768,6 g Produkt mit einer Jodzahl von 101,5.

100 g dieses Siloxans werden mit 25,67 g eines SiH-haltigen Siloxans der Formel

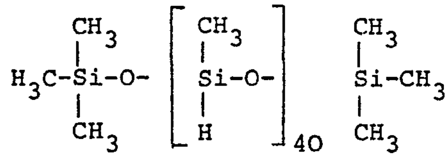

sowie mit 6,7 mg eines Platinkomplexes der Formel Pyridin · $C_2H_4$ · $PtCl_2$ gut verrührt. Die so zubereitete Mischung hat eine Viskosität von 97 mPa.s (97 cP) und eine Topfzeit von > 24 Stunden.

Anwendungstechnische Prüfung

Die Zubereitungen der Beispiele 1 bis 7 werden mit einer 10 μ-Rakel auf ein gelbes Pergaminpapier (60 $g/m^2$) mit einer Auflage von ca. 8 $g/m^2$ aufgetragen und in einem Umlufttrockenschrank 30 Sekunden bei 130 °C zu klebfreien Beschichtungen ausgehärtet. Folgende Tests wurden durchgeführt :

a) Trennwert bei 20 °C und 70 °C
b) Restklebkräfte
c) Abriebfestigkeiten
d) Topfzeiten

a) Bestimmung der Trennwerte
Auf das beschichtete Papier wird selbstklebendes Klebeband mit der Breite von 3 cm auf das Papier gewalzt. Nach 24 Stunden Erwärmen auf 70 °C unter einer Belastung von 2 KPa (20 $p/cm^2$) und Abkühlen auf 20 °C wird das Klebeband unter einem Winkel von 180° mit einer Geschwindigkeit von 0,01 m/s (60 cm/Minute) abgezogen. Es wird die Kraft, die für dieses Abziehen erforderlich ist und in der folgenden Tabelle als Trennwert bezeichnet wird, gemessen. Die Prüfung wird ebenfalls bei 20 °C durchgeführt.

b) Bestimmung der Restklebkraft
Die gemäß a) abgezogenen Klebestreifen werden auf eine Glasplatte gewalzt und 24 Stunden mit 2 KPa (20 $p/cm^2$) bei 20 °C und 70 °C belastet. Danach wird der Klebestreifen, wie bei der Bestimmung der Trennwerte beschrieben, abgezogen. Die so ermittelte verbliebene Klebkraft wurde in Relation zu der Klebkraft gesetzt, die bei einem Blindversuch ermittelt worden war, bei dem der Klebestreifen sofort auf die Glasplatte gewalzt worden war (und nicht erst auf das beschichtete Papier). Dieser Blindwert wurde mit 100 % angenommen.

c) Abriebfestigkeiten
Das Papier wurde zwischen den Fingern kräftig gerieben.

d) Topfzeiten
Es wurde die Viskosität beobachtet und die Verarbeitbarkeit geprüft.

(Siehe die Tabelle, Seite 10)

| Beispiel | Trennwert 20°C | Trennwert 70°C | Restklebkraft 20°C % | Restklebkraft 70°C % | Topfzeit | Abriebfestigkeit |
|---|---|---|---|---|---|---|
| 1 | 0 | 5 | 92 | 87 | > 8 h | gut |
| 2 | 0 | 5 | 88 | 82 | > 8 h | gut |
| 3 | 0 | 10 | 95 | 90 | > 8 h | gut |
| 4 | 5 | 5 | 89 | 84 | > 8 h | gut |
| 5 | 0 | 5 | 91 | 86 | > 24 h | gut |
| 6 | 0 | 5 | 92 | 87 | > 8 h | gut |
| 7 | 0 | 5 | 89 | 84 | > 24 h | gut |

**Ansprüche**

1. Verfahren zur Herstellung von vernetzten Organopolysiloxanen durch Umsetzung von Organosiliciumverbindungen A, welche olefinisch ungesättigte Gruppen aufweisen, mit Organosiliciumverbindungen B, welche SiH-Gruppen aufweisen, in Gegenwart von Katalysatoren, dadurch gekennzeichnet, daß als Organosiliciumverbindungen A solche verwendet werden, die im mittleren Molekül mindestens eine Gruppe der Formel

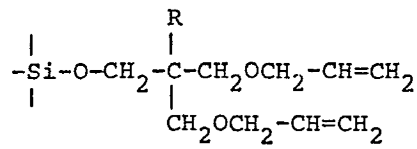

wobei R eine Methyl-, Äthyl- oder $—CH_2OCH_2—CH = CH_2$-Gruppe ist, enthalten und mit den Organosiliciumverbindungen B in solchen Mengen umgesetzt werden, daß das Verhältnis SiH-Gruppen zu olefinischen Doppelbindungen 1 : 1-3 beträgt.

2. Verfahren nach Anspruch 1, dadurch gekennzeichnet, daß als Organosiliciumverbindungen A, Organopolysiloxane verwendet werden.

3. Verfahren nach Anspruch 2, dadurch gekennzeichnet, daß als Organopolysiloxane Methylpolysiloxane verwendet werden.

4. Verfahren nach Anspruch 3, dadurch gekennzeichnet, daß als Methylpolysiloxane solche der allgemeinen Formel

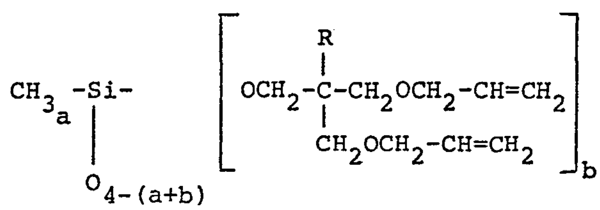

wobei

R die oben angegebene Bedeutung,

a einen Wert von 1,8 bis 2,2 und

b einen Wert von 0,004 bis 0,5 hat, verwendet werden.

5. Verfahren nach Anspruch 4, dadurch gekennzeichnet, daß Methylpolysiloxane verwendet werden, bei denen a einen Wert von 2 hat.

6. Verwendung der nach Anspruch 1 bis 5 hergestellten vernetzten Organopolysiloxane als Wirkstoff für abhäsive Beschichtungsmassen für flächige Träger, insbesondere Papier und Kunststoffolien.

**Claims**

1. Process for the preparation of crosslinked organopolysiloxanes by the reaction of organosilicon compounds A, which contain olefinically unsaturated groups, with organosilicon compounds B, which contain SiH groups, in the presence of catalysts, characterised in that the organosilicon compounds A used contain, in the average molecule, at least one group of the formula

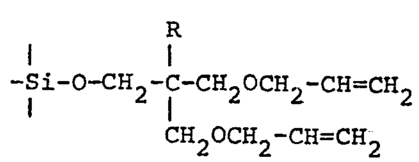

in which R is a methyl, ethyl or $—CH_2OCH_2—CH = CH_2$ group, and are reacted with the organosilicon compounds B in amounts such that the ratio of SiH groups to olefinic double bonds is 1 : 1-3.

2. Process according to Claim 1, characterised in that organopolysiloxanes are used as the organosilicon compounds A.

3. Process according to Claim 2, characterised in that methylpolysiloxanes are used as the organopolysiloxanes.

4. Process according to Claim 3, characterised in that the methylpolysiloxanes used have the general formula

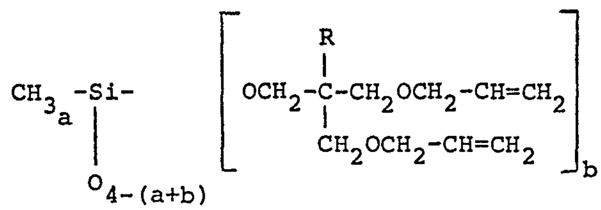

in which

R has the meaning indicated above,

of 1.8 to 2.2 and

b has a value of 0.004 to 0.5.

5. Process according to Claim 4, characterised in that methylpolysiloxanes are used in which a has a value of 2.

6. Use of the crosslinked organopolysiloxanes prepared according to Claims 1 to 5 as active ingredients for non-stick coating compositions for plane substrates, in particular paper and plastic films.

**Revendications**

1. Procédé pour la préparation d'organopolysiloxannes réticulés par la réaction de composés organosiliciques A présentant des groupes à insaturation oléfinique sur des composés organosiliciques B présentant des groupes SiH, en présence de catalyseurs, caractérisé en ce qu'on utilise en tant que composés organosiliciques A ceux contenant dans la molécule centrale au moins un groupe de formule où R est un groupe méthyle, éthyle ou $—CH_2OCH_2—CH = CH_2$, et qu'on les fait réagir sur des composés organosiliciques B en des quantités telles que le rapport entre les groupes SiH et les doubles liaisons oléfiniques soit de 1 : 1-3.

2. Procédé selon la revendication 1, caractérisé en ce qu'on utilise en tant que composés organosiliciques A des organopolysiloxannes.

3. Composé selon la revendication 2, caractérisé en ce qu'on utilise en tant qu'organopolysiloxannes des méthylpolysiloxannes.

4. Procédé selon la revendication 3, caractérisé en ce qu'on utilise en tant que méthylpolysiloxannes ceux de formule générale

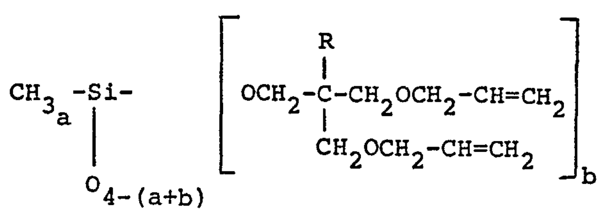

où

R a la signification donnée ci-dessus,

a vaut de 1,8 à 2,2 et

b vaut de 0,004 à 0,5.

5. Procédé selon la revendication 4, caractérisé en ce qu'on utilise des méthylpolysiloxannes où a vaut 2.

6. Utilisation des organopolysiloxannes réticulés préparés selon l'une quelconque des revendications 1 à 5 en tant que matière active pour des matières d'enduction adhésives pour supports plats, en particulier papier et feuilles plastiques.